# EUROPÄISCHE PATENTSCHRIFT

(11) **EP 3 941 156 B1**
(45) Veröffentlichungstag und Bekanntmachung des Hinweises auf die Patenterteilung: **17.06.2026**
(21) Anmeldenummer: 21183941.0
(22) Anmeldetag: 06.07.2021
(51) Int. Cl.: F24D 13/02, F24D 3/14, H05B 3/26

(54) **VERFAHREN ZUR VERLEGUNG EINER FLÄCHENHEIZUNG UND FLÄCHENHEIZUNG**
SURFACE HEATING AND METHOD FOR LAYING SURFACE HEATING
PROCÉDÉ DE POSE D'UN CHAUFFAGE DE SURFACE ET CHAUFFAGE DE SURFACE

(30) Priorität: 17.07.2020 DE 102020208962
(43) Veröffentlichungstag der Anmeldung: 19.01.2022
(73) Patentinhaber: Kermi GmbH, 94447 Plattling (DE)
(72) Erfinder: REISINGER, Alexander, 94239 Ruhmannsfelden (DE)
(74) Vertreter: Patentanwälte Bressel und Partner mbB

(56) Entgegenhaltungen:
- EP-B1- 3 183 505
- DE-A1- 3 513 971
- DE-U1- 202018 104 873
- KR-B1- 101 274 882

## Beschreibung

Die Erfindung betrifft ein Verfahren zur Verlegung einer Flächenheizung bei dem Heizrohre für ein Heizmedium verlegt werden und zusätzlich dazu elektrisch betriebene Heizleiter verlegt werden, nach dem Oberbegriff des Anspruchs 1 sowie eine Flächenheizung, die eine Kombination von mit einem Heizmedium durchströmbaren Heizrohren und elektrischen Heizleitern umfasst, nach dem Oberbegriff des Anspruchs 5.

Verfahren und Vorrichtungen der eingangs genannten Art sind aus dem Stand der Technik bereits bekannt und dem Fachmann auch geläufig. Hierzu werden Plattenelemente, vorzugsweise aus Kunststoff, mit eingeprägten Kanälen zur Aufnahme der Heizrohre verwendet. Zum Einsatz kommen dabei Plattenelemente in unterschiedlichen Gestaltungen. Insbesondere sind Plattenelemente aus Kunststoff, z. B. Polystyrol bekannt, die auf ihrer Oberfläche nach außen weisende Klemmnocken aufweisen, zwischen welchen die Heizrohre klemmbar sind. Allerdings ist es auch wünschenswert, die Heizleistung zu erhöhen, weshalb zusätzlich dazu elektrisch betriebene Heizleiter vorgesehen werden.

Hierzu ist nach der DE 10 2012 012 544 A1 vorgesehen, dass das Heizrohr und der Heizleiter in einem Wärmequerverteilerelement verlaufen, das der Oberflächenkontur eines Plattenelementes einschließlich des Kanales und der Rillen angepasst ist.

Neben dem eingeprägten Kanal zur Aufnahme der Heizrohre weist das Plattenelement zusätzlich eine längs verlaufende Rille zur Aufnahme des Heizleiters auf. Das Plattenelement kann dabei mehr als eine längs verlaufende Rille aufweisen, wobei die Rillen vorzugsweise beidseitig des Kanales verlaufen. Das zu dem Plattenelement korrespondierende Wärmequerverteilerelement weist dabei eine Kontur auf, die der Oberflächenkontur der Platte einschließlich der Kanäle und Rillen angepasst ist, d. h. Rillen zur Aufnahme von Heizleitern, die beabstandet und parallel zum Kanal für die Aufnahme des Heizrohres verlaufen. Schließlich sieht diese Erfindung auch ein Fußbodenheizungselement vor, dass das Plattenelement sowie das Wärmequerverteilerelement aufweist, wobei das Wärmequerverteilerelement auf der Platte aufgebracht und mit dieser verbunden ist. Das Verfahren und die Vorrichtung, welche ein Plattenelement mit einzuprägenden Kanälen und zusätzlich einem Wärmequerverteilerelement mit entsprechenden Kanälen ausgehen, sind umständlich und zeitaufwändig und in Bezug auf durch die Plattenelemente entstehende Wärmeverluste energetisch nicht vertretbar. Ein weiteres Element zur Verlegung von Heizrohren neben elektrischen Heizleitern in hintereinander anzuordnenden längs verlaufenden Rillen ist aus dem Dokument KR101274882 B1 bekannt. In dem Dokument geht jedoch um eine Anordnung bzw. Installationseinheit zur Verringerung des Trittschalls in einer Wohnung. Die Installationseinheit umfasst dabei auch eine elektrische Widerstandsleitung und ein Warmwasserrohr, die in einem Aluminiumrahmen der Installationseinheit längs im Rahmen verlaufend installiert sind. Auf der Grundlage der besonderen Konstruktion der Installationseinheit mit einer Aufnahme für Keramikkugeln und einer schwammartigen Unterlage kann dabei der Trittschall absorbiert werden.

Es ist deshalb Aufgabe der vorliegenden Erfindung, ein Verfahren und eine Vorrichtung der eingangs genannten Art derart weiterzuentwickeln, dass die Beheizung von Fußböden noch effektiver gestaltet werden kann.

Diese Aufgabe wird mit den Merkmalen der unabhängigen Ansprüche 1 und 6 gelöst. Vorteilhafte Ausgestaltungen der Erfindung ergeben sich aus den jeweils zugehörigen Ansprüchen.

Vorteilhaft wird durch die Erfindung ermöglicht, dass kein Plattenelement zur Verlegung einer Flächenheizung erforderlich ist, bei welcher zusätzlich zu mit einem Heizmedium (Warmwasser) durchströmbaren Heizrohren mit elektrischem Strom versorgbare Heizleiter vorgesehen werden, sondern wenigstens eine Klemmschiene vorgesehen wird, welche die Heizrohre und die Heizleiter über die für die Heizung vorgesehene Fläche oder eines Teils der Fläche über die Klemmschiene fixiert, wobei die Heizrohre und die elektrischen Heizleiter in an der Klemmschiene vorgesehenen Aufnahmen eingebracht werden und darin gehalten werden.

Nach einem besonders bevorzugten Merkmal der Erfindung ist vorgesehen, dass wenigstens zwei Klemmschienen verlegt werden, die sich über die Breite der Flächenheizung erstreckend parallel gegenüberliegend angeordnet sind, wobei die Klemmschienen die Heizrohre über die für die Heizung vorgesehene Fläche fixieren und wobei die Klemmschienen Aufnahmen für Heizrohre und für elektrische Heizleiter aufweisen.

Die vorliegende Erfindung sieht also vor, sowohl das Prinzip der Warmwasserheizung als auch das Prinzip der Elektroheizung in eine Flächenheizung ohne aufwändig gestaltete plattenförmige Verlegeelemente zu vereinen. Hierzu ist vorzugsweise vorgesehen, dass das Heizrohr und der Heizleiter zwischen gegenüberliegenden Klemmschienen verlaufend angeordnet werden, wobei die in den Klemmschienen vorgesehenen Aufnahmeöffnungen den Heizrohren und den Heizleiter angepasst sind.

Ein Vorteil der Erfindung ist es, die Heizleistung pro Flächenheizung durch eine zusätzliche Verlegung von Heizleitern zu erhöhen und zwar ohne den Einsatz von energetisch nachteiligen plattenförmigen Verlegeelementen.

Neben einer eingeprägten Öffnung zur Aufnahme der Heizrohre weisen die Klemmschienen zusätzlich parallele Öffnungen d. h. Rillen oder Einschneidungen zur Aufnahme und Verlegung von Heizleitern auf, die voneinander beabstandet sind und parallel zu den Öffnungen für die Aufnahme der Heizrohre verlaufen.

Eine vorteilhafte Ausgestaltung der Erfindung sieht dabei vor, dass die Rillen oder Einschneidungen, Bohrungen bzw. Öffnungen in den Klemmschienen Hinterschneidungen oder Klemmnasen aufweisen, in welche die Heizrohre für das Heizmedium bzw. den elektrischen Heizleitern eingedrückt oder eingefädelt werden, um ein Herausfallen zu verhindern.

Dabei werden Klemmschienen für die Flächentemperierung (Wand, Boden, Decke) eingesetzt, die Öffnungen, Einschneidungen, Bohrungen oder Rillen aufweisen, in welche mit einem Heizmedium durchströmbare Heizrohre (z.B. mit einem Durchmesser von 10 mm) eingeklemmt werden können und zusätzlich Öffnungen, Einschneidungen, Bohrungen oder Rillen mit einem kleineren Durchmesser vorgesehen werden, in welche elektrische Heizkabel gehalten werden können.

Bei dieser Ausbildung der Schiene ist es demnach möglich, Heizkabel zusätzlich zwischen den mit einem Heizmedium durchströmten Heizrohren einzuklemmen bzw. zu halten.

Für alle Varianten sind gleiche oder auch verschiedene Verlegeabstände möglich.

Die Wasserrohre werden dann nicht oder nicht ausreichend durchströmt, um den Fliesenboden (z.B. im Wohnzimmer) angenehm zu beheizen. Durch die vorliegende Erfindung wird die Möglichkeit geschaffen, bei Bedarf ausschließlich die Elektroheizung zuzuschalten und somit den Wärmebedarf in der Übergangszeit zu decken.

Nachfolgend wird die Erfindung an einem Ausführungsbeispiel näher erläutert.

### In den Zeichnungen zeigen

- Fig. 1: eine Klemmschiene in perspektivischer Ansicht,
- Fig. 2: eine Seitenansicht der Klemmschiene nach Fig. 1,
- Fig. 3: eine Flächenheizung mit einer Klemmschiene in einer Draufsicht,
- Fig. 4: eine Flächenheizung mit einer Klemmschiene in einer perspektivischen Ansicht,
- Fig. 5: eine Flächenheizung mit einer Klemmschiene in einer Draufsicht mit einem anderen Verlegeabstand,
- Fig. 6: eine Flächenheizung mit einer Klemmschiene nach Fig. 5 in einer perspektivischen Ansicht,
- Fig. 7: eine Flächenheizung mit zwei Klemmschienen in einer Draufsicht,
- Fig. 8: eine Flächenheizung mit zwei Klemmschienen in einer perspektivischen Ansicht,
- Fig. 9: eine Flächenheizung mit zwei Klemmschienen in einer Draufsicht mit einem anderen Verlegeabstand, und
- Fig. 10: eine Flächenheizung mit zwei Klemmschiene nach Fig. 9 in einer perspektivischen Ansicht.

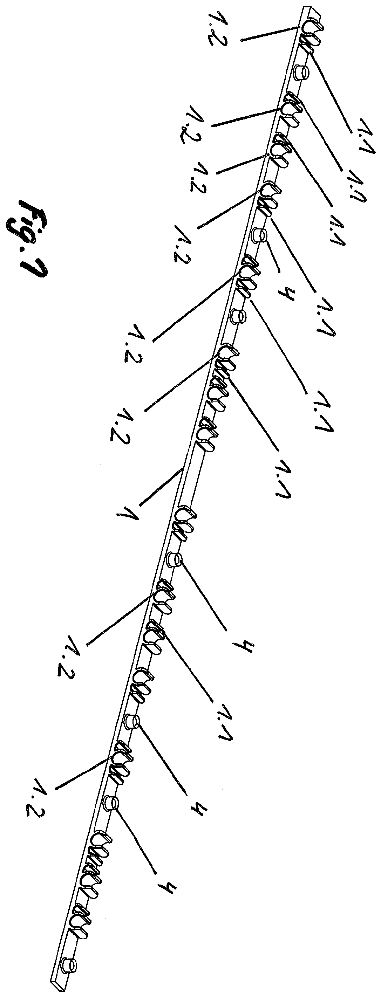

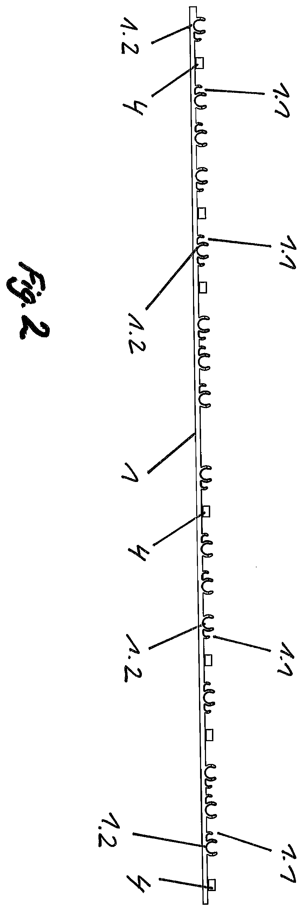

In den Figuren 1 und 2 ist eine Klemmschiene 1 in verschiedenen Ansichten dargestellt. Die Klemmschiene weist Aufnahmen 1.1 für Heizrohre 2 und Aufnahmen 1.2 für elektrische Heizleiter 3 auf. Mit dem Bezugszeichen 4 sind Befestigungspunkte der Klemmschiene 1 bezeichnet, die der Aufnahme von Befestigungsmitteln (nicht dargestellt) dienen. Damit werden die Flächenheizungen auf einem Untergrund (nicht dargestellt) befestigt.

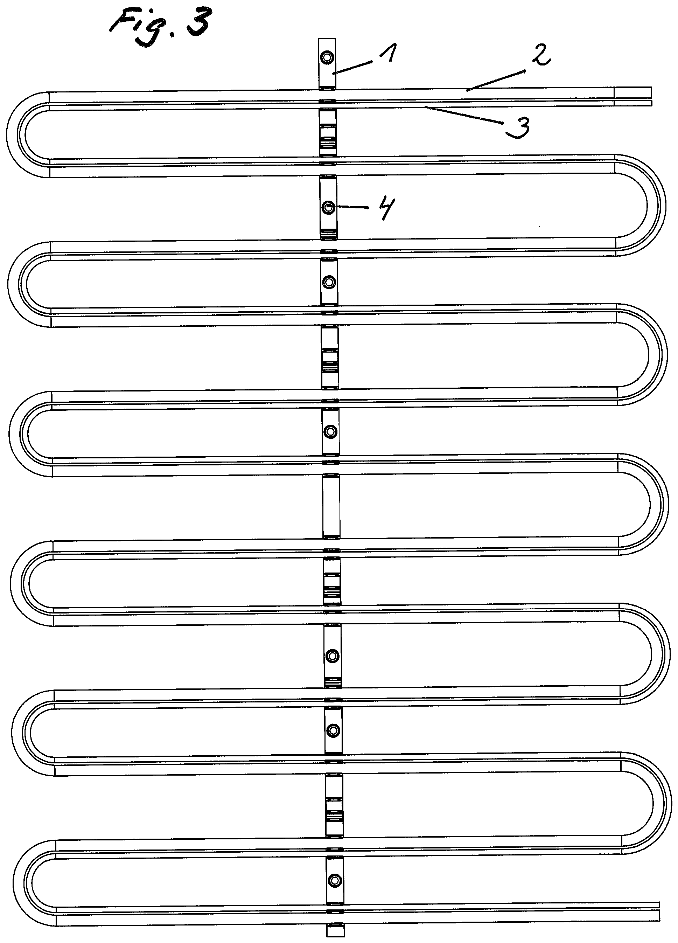

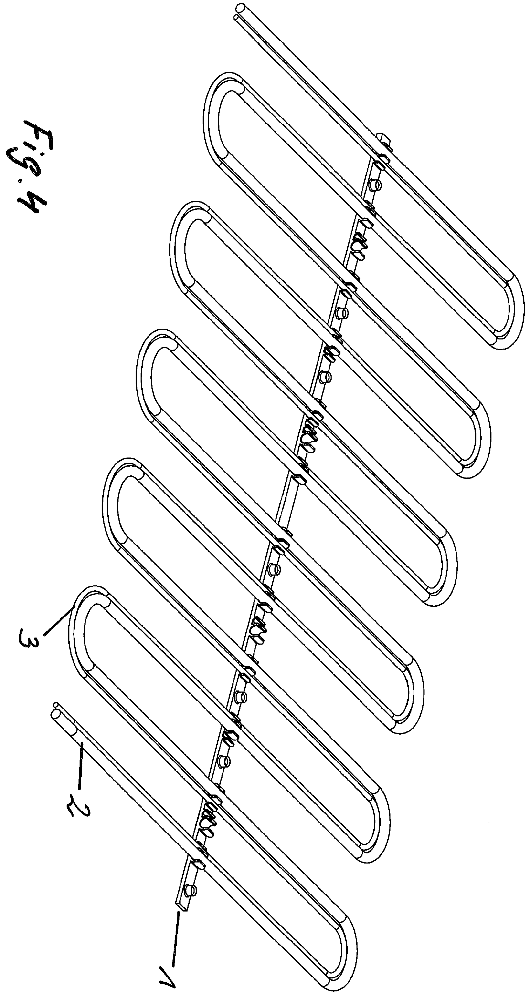

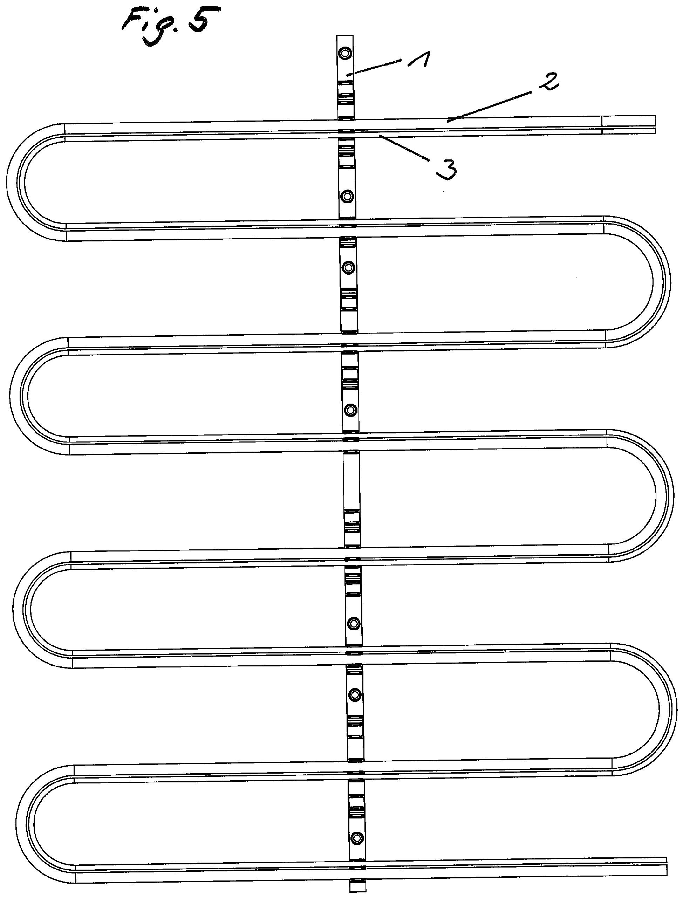

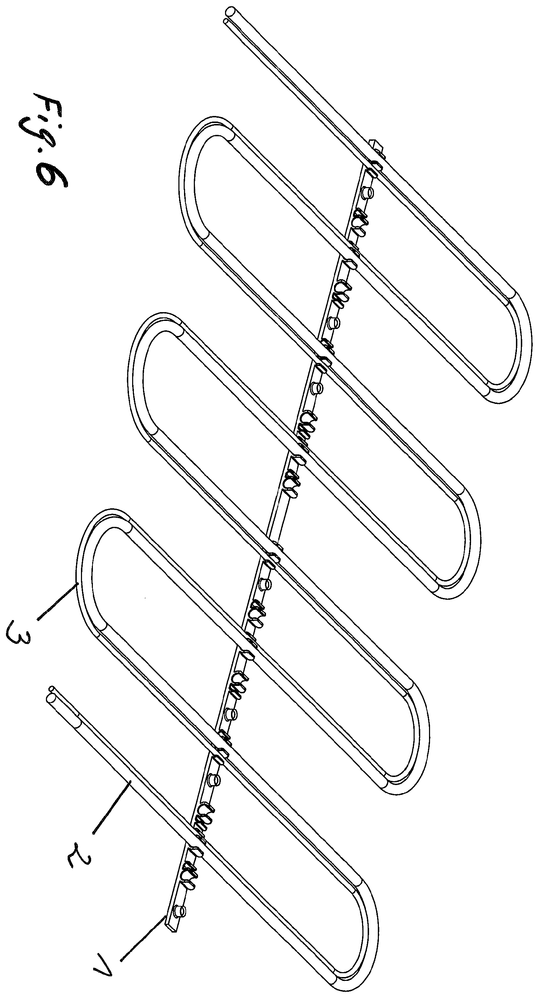

In den Fig. 3 bis 6 werden nach dem erfindungsgemäßen Verfahren verlegte Flächenheizungen gezeigt, die eine Kombination von mit einem Heizmedium durchströmbaren Heizrohren 2 und elektrischen Heizleitern 3 umfassen, wobei die das Heizmedium leitenden Heizrohre 2 mäanderförmig an einer mittig liegenden Klemmschiene 1 angeordnet sind. Die Klemmschiene 1 fixiert dabei die Heizrohre 2 und die Heizleiter 3 über die für die Heizung vorgesehene Fläche oder eines Teils der Fläche und weist Aufnahmen 1.1, 1.2 für die Heizrohre und für die elektrischen Heizleiter auf. Die in der Klemmschiene 1 vorgesehenen Aufnahmen 1.1, 1.2 sind in definierten Abständen zueinander angebracht und als Öffnungen ausgebildet, die den Durchmessern und/oder Querschnittsformen der Heizrohre und Heizleiter entsprechen. Die in der Klemmschiene vorgesehenen Aufnahmen sind hier vorzugsweise als Einschneidungen ausgebildet und weisen Hinterschneidungen mit Klemmnasen auf.

Zusätzlich zu den Heizrohren 2 für ein Heizmedium werden demnach elektrisch betriebene Heizleiter 3 über die Breite der Flächenheizung oder eines Abschnitts der Flächenheizung an der Klemmschiene 1 verlegt. Die Klemmschiene 1 ist hier mittig angeordnet und die Heizrohre 2 und Heizleiter 3 verlaufen auf beiden Seiten der Klemmschiene symmetrisch. Über die Klemmschienen werden die Heizrohre und die Heizleiter über die für die Heizung vorgesehene Fläche oder eines Teils der Fläche fixiert, wobei die Heizrohre und die elektrischen Heizleiter in an den Klemmschienen vorgesehenen Aufnahmen eingebracht werden und darin fixiert werden.

Die Aufnahmen 1.1, 1.2 können, wie aus den Zeichnungen ersichtlich, mehrfach angeordnet sein, so dass durch diese Anordnung verschiedene Verlegeabstände zwischen Rohren bzw. elektrischen Heizleitern realisiert werden können. Die Aufnahmen 1.1, 1.2 können auch so ausgebildet sein, dass Heizrohre und/oder Heizleiter verschiedener Durchmesser darin fixiert werden können.

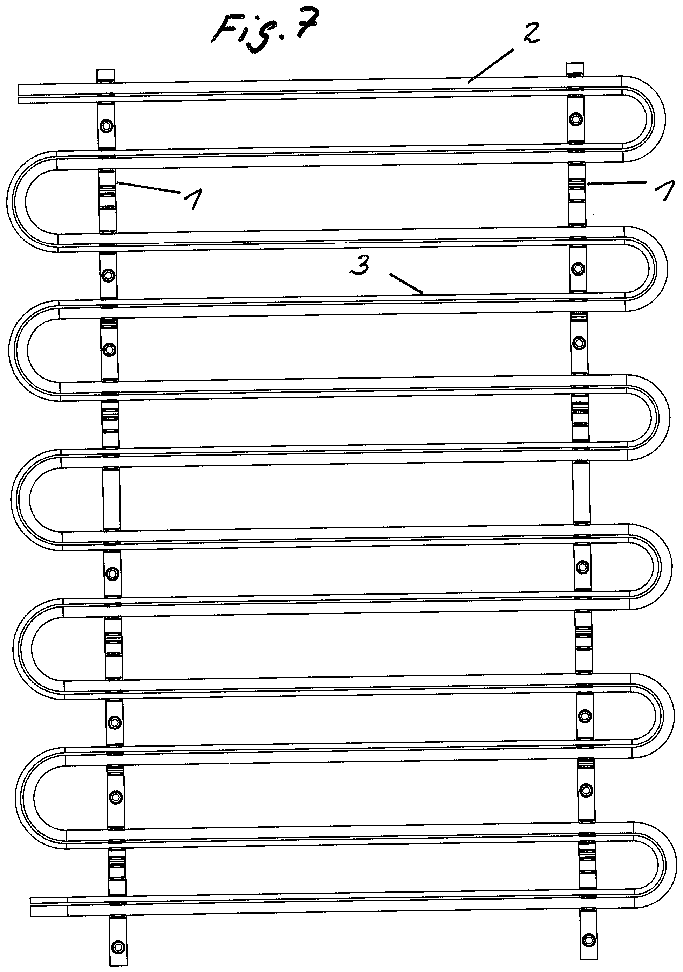

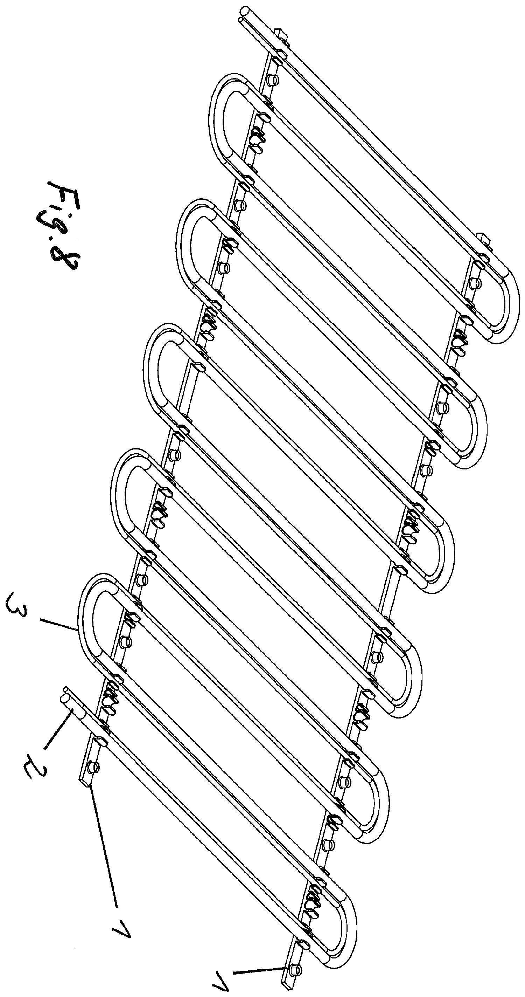

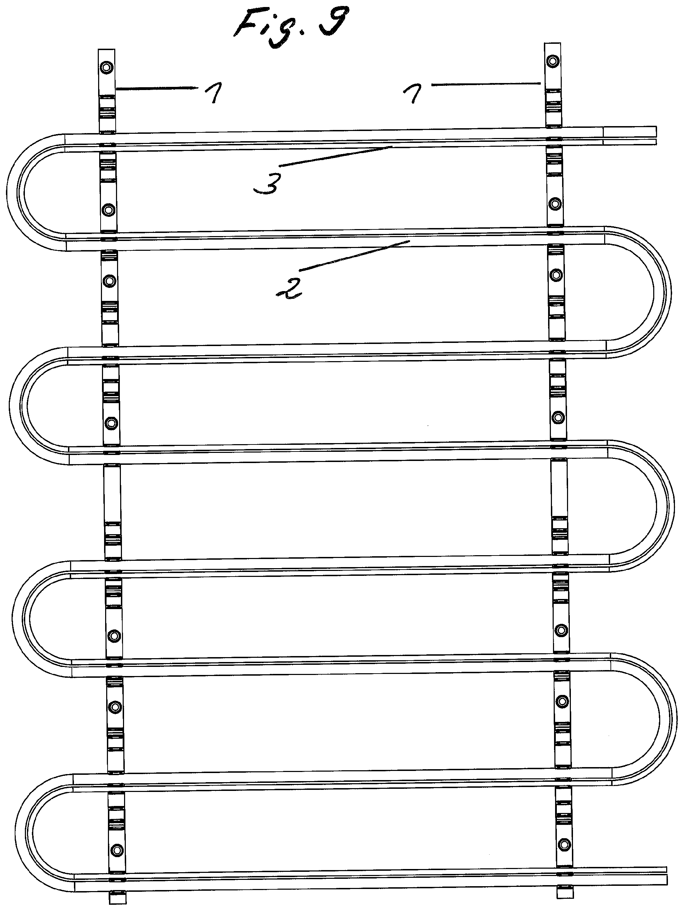

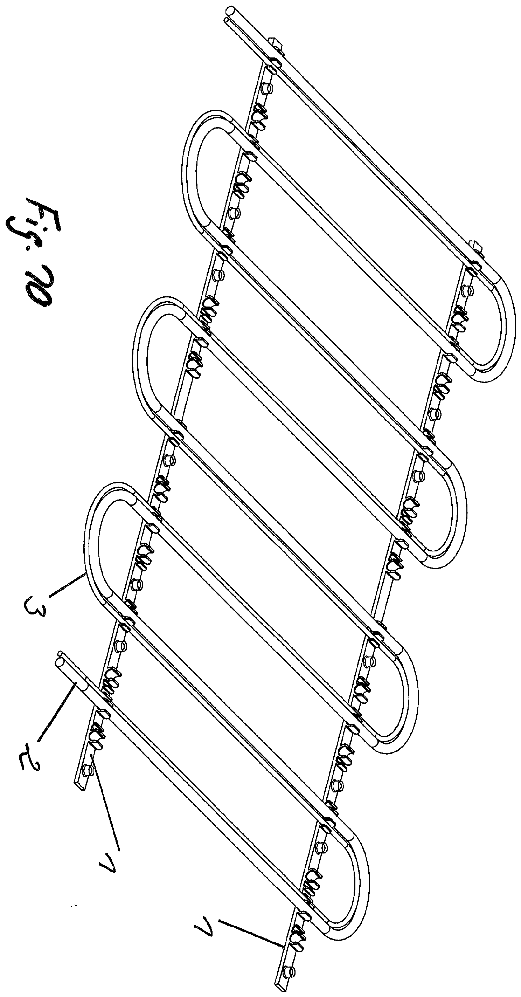

In den Fig. 7 bis 10 werden nach dem erfindungsgemäßen Verfahren verlegte Flächenheizungen gezeigt, die eine Kombination von mit einem Heizmedium durchströmbaren Heizrohren und elektrischen Heizleitern umfassen, wobei die das Heizmedium leitenden Heizrohre mäanderförmig und parallel gegenüberliegend zwischen zwei Klemmschienen 1 angeordnet sind. Die Klemmschienen 1 fixieren die Heizrohre 2 und die Heizleiter 3 über die für die Heizung vorgesehene Fläche oder eines Teils der Fläche und weisen Aufnahmen 1.1, 1.2 für die Heizrohre 2 und für die elektrischen Heizleiter 3 auf. Die in den Klemmschienen 1 vorgesehenen Aufnahmen 1.1, 1.2 sind in definierten Abständen zueinander angebracht und als Öffnungen ausgebildet, die den Durchmessern und/oder Querschnittsformen der Heizrohre und Heizleiter entsprechen. Die in den Klemmschienen vorgesehenen Aufnahmen sind hier vorzugsweise als Einschneidungen ausgebildet und weisen Hinterschneidungen mit Klemmnasen auf.

Zusätzlich zu den Heizrohren 2 für ein Heizmedium werden demnach elektrisch betriebene Heizleiter 3 über die Breite der Flächenheizung oder eines Abschnitts der Flächenheizung zwischen zwei Klemmschienen 1 verlegt. Die Klemmschienen 1 werden dazu parallel gegenüberliegend angeordnet. Über die Klemmschienen 1 werden die Heizrohre 2 und die Heizleiter 3 über die für die Heizung vorgesehene Fläche oder eines Teils der Fläche fixiert, wobei die Heizrohre 2 und die elektrischen Heizleiter 3 in an den Klemmschienen 1 vorgesehenen Aufnahmen 1.1, 1.2 eingebracht werden und darin fixiert werden.

Die Aufnahme 1.1, 1.2 können wie aus den Zeichnungen ersichtlich mehrfach angeordnet sein, so dass durch diese Anordnung verschiedene Verlegeabstände zwischen Rohren bzw. elektrischen Heizleitern realisiert werden können. Die Aufnahmen können auch so ausgebildet sein, dass Heizrohre und/oder Heizleiter verschiedener Durchmesser darin fixiert werden können.

## Patentansprüche

1. Verfahren zur Verlegung einer Flächenheizung, bei dem Heizrohre (2) für ein Heizmedium verlegt werden und zusätzlich dazu elektrisch betriebene Heizleiter (3) verlegt werden, wobei die ein Heizmedium leitenden Heizrohre (2) und die elektrisch betriebenen Heizleiter (3) über die Breite der Flächenheizung oder eines Abschnitts der Flächenheizung mittels wenigstens einer Klemmschiene (1) verlegt werden, wobei die Heizrohre (2) und die Heizleiter (3) über die für die Heizung vorgesehene Fläche oder eines Teils der Fläche über die Klemmschiene (1) fixiert werden und die Heizrohre (2) und die elektrischen Heizleiter (3) in an der Klemmschiene (1) vorgesehenen Aufnahmen (1.1, 1.2) eingebracht werden und darin fixiert werden **dadurch gekennzeichnet, dass** die das Heizmedium leitenden Heizrohre 2 mäanderförmig an einer mittig liegenden Klemmschiene (1) oder parallel gegenüberliegend zwischen zwei Klemmschienen (1) angeordnet werden.

2. Verfahren nach Ansprch 1, **dadurch gekennzeichnet, dass** die in den Klemmschienen (1) vorgesehenen Aufnahmen (1.1, 1.2) in definierten Abständen zueinander angebracht werden und als Öffnungen ausgebildet werden, die den Durchmessern und/oder Querschnittsformen der Heizrohre und Heizleiter angepasst sind.

3. Verfahren nach den Ansprüchen 1 und 2, **dadurch gekennzeichnet, dass** die in den Klemmschienen (1) vorgesehenen Aufnahmen (1.1, 1.2) als Rillen, Einschneidungen, Bohrungen oder Öffnungen ausgebildet werden.

4. Verfahren nach den Ansprüchen 1 bis 3, **dadurch gekennzeichnet, dass** die in den Klemmschienen (1) vorgesehenen Aufnahmen (1.1, 1.2) mit Hinterschneidungen oder Klemmnasen versehen werden.

5. Verfahren nach den Ansprüchen 1 bis 4, **dadurch gekennzeichnet, dass** die in den Klemmschienen (1) vorgesehenen Aufnahmen (1.1, 1.2) mehrfach angeordnet sind und verschiedene Verlegeabstände zwischen den Heizrohren (2) und Heizleitern (3) erlauben.

6. Flächenheizung, die eine Kombination von mit einem Heizmedium durchströmbaren Heizrohren (2) und elektrischen Heizleitern (3) umfasst, wobei die das Heizmedium leitenden Heizrohre (2) und die elektrischen Heizleiter (3) von mindestens einer Klemmschiene (1) gehalten werden, wobei die Klemmschiene (1) die Heizrohre (2) und die Heizleiter (3) über die für die Heizung vorgesehene Fläche oder eines Teils der Fläche fixiert und wobei die Klemmschiene (1) mit Aufnahmen (1.1, 1.2) für die Heizrohre (2) und für die elektrischen Heizleiter (3) versehen ist, **dadurch gekennzeichnet, dass** die das Heizmedium leitenden Heizrohre 2 mäanderförmig an einer mittig liegenden Klemmschiene (1) oder parallel gegenüberliegend zwischen zwei Klemmschienen (1) angeordnet sind.

7. Flächenheizung nach Anspruch 6, **dadurch gekennzeichnet, dass** die in den Klemmschienen (1) vorgesehenen Aufnahmen (1.1, 1.2) in definierten Abständen zueinander angebracht sind und als Öffnungen ausgebildet sind, die den Durchmessern und/oder Querschnittsformen der Heizrohre (2) und Heizleiter (3) entsprechen.

8. Flächenheizung nach einem der Ansprüche 6 und 7, **dadurch gekennzeichnet, dass** die in den Klemmschienen (1) vorgesehenen Aufnahmen (1.1, 1.2) als Rillen, Einschneidungen, Bohrungen oder Öffnungen ausgebildet sind.

9. Flächenheizung nach einem der Ansprüche 6 bis 8, **dadurch gekennzeichnet, dass** die in den Klemmschienen (1) vorgesehenen Aufnahmen (1.1, 1.2) Hinterschneidungen oder Klemmnasen aufweisen.

10. Flächenheizung nach einem der Ansprüche 6 bis 9, **dadurch gekennzeichnet, dass** die in den Klemmschienen (1) vorgesehenen Aufnahmen (1.1, 1.2) mehrfach angeordnet sind und verschiedene Verlegeabstände zwischen den Heizrohren und Heizleitern erlauben.

## Claims

1. A method for laying surface heating, in which heating tubes (2) for a heating medium are laid and electrically operated heating conductors (3) are laid in addition thereto, the heating tubes (2) conducting a heating medium and the electrically operated heating conductors (3) being laid over the width of the surface heating or a portion of the surface heating by means of at least one clamping rail (1), the heating tubes (2) and the heating conductors (3) being fixed over the surface area intended for the heating or part of the surface area by means of the clamping rail (1) and the heating tubes (2) and the electrical heating conductors (3) being introduced into receptacles (1.1, 1.2) provided on the clamping rail (1) and being fixed therein, **characterized in that** the heating tubes 2 conducting the heating medium are arranged in a meandering shape on a centrally positioned clamping rail (1) or are arranged in parallel and opposite between two clamping rails (1).

2. The method according to claim 1, **characterized in that** the receptacles (1.1, 1.2) provided in the clamping rails (1) are attached at defined distances from one another and are configured as openings which are adapted to the diameters and/or cross-sectional shapes of the heating tubes and heating conductors.

3. The method according to claims 1 and 2, **characterized in that** the receptacles (1.1, 1.2) provided in the clamping rails (1) are configured as grooves, notches, holes, or openings.

4. The method according to claims 1 to 3, **characterized in that** the receptacles (1.1, 1.2) provided in the clamping rails (1) are provided with undercuts or clamping lugs.

5. The method according to claims 1 to 4, **characterized in that** the receptacles (1.1, 1.2) provided in the clamping rails (1) are arranged multiple times and allow for different laying distances between the heating tubes (2) and the heating conductors (3).

6. Surface heating which comprises a combination of heating tubes (2) through which a heating medium can flow and electrical heating conductors (3), the heating tubes (2) conducting the heating medium and the electrical heating conductors (3) being held by at least one clamping rail (1), the clamping rail (1) fixing the heating tubes (2) and the heating conductors (3) over the surface area intended for the heating or part of the surface area and the clamping rail (1) being provided with receptacles (1.1, 1.2) for the heating tubes (2) and for the electrical heating conductors (3), **characterized in that** the heating tubes 2 conducting the heating medium are arranged in a meandering shape on a centrally positioned clamping rail (1) or are arranged in parallel and opposite between two clamping rails (1).

7. The surface heating according to claim 6, **characterized in that** the receptacles (1.1, 1.2) provided in the clamping rails (1) are attached at defined distances from one another and are configured as openings which correspond to the diameters and/or cross-sectional shapes of the heating tubes (2) and heating conductors (3).

8. The surface heating according to any one of claims 6 and 7, **characterized in that** the receptacles (1.1, 1.2) provided in the clamping rails (1) are configured as grooves, notches, holes, or openings.

9. The surface heating according to any one of claims 6 to 8, **characterized in that** the receptacles (1.1, 1.2) provided in the clamping rails (1) comprise undercuts or clamping lugs.

10. The surface heating according to any one of claims 6 to 9, **characterized in that** the receptacles (1.1, 1.2) provided in the clamping rails (1) are arranged multiple times and allow for different laying distances between the heating tubes and the heating conductors.

## Revendications

1. Procédé de pose d'un chauffage en surface, dans lequel des tubes chauffants (2) destinés à un fluide caloporteur sont posés et des conducteurs chauffants commandés électriquement (3) sont posés de manière additionnelle à ceux-ci, les tubes chauffants (2) conduisant un fluide caloporteur et les conducteurs chauffants commandés électriquement (3) étant posés sur la largeur du chauffage en surface ou une partie du chauffage de surface au moyen d'au moins un rail de serrage (1), les tubes chauffants (2) et les conducteurs chauffants (3) étant fixés sur la zone de surface destinée au chauffage ou une partie de la zone de surface au moyen du rail de serrage (1) et les tubes chauffants (2) et les conducteurs chauffants électriques (3) étant introduits dans des compartiments (1.1, 1.2) pourvus sur le rail de serrage (1) et étant fixés à l'intérieur de ceux-ci, **caractérisé en ce que** les tubes chauffants 2 conduisant le fluide caloporteur sont agencés de manière sinueuse sur un rail de serrage (1) positionné de manière centrale ou sont agencés en parallèle et de manière opposée entre deux rails de serrage (1).

2. Procédé selon la revendication 1, **caractérisé en ce que** les compartiments (1.1, 1.2) pourvus dans les rails de serrage (1) sont attachés à des distances définies les uns des autres et sont configurés sous forme d'ouvertures qui sont adaptées aux diamètres et/ou aux formes des sections transversales des tubes chauffants et des conducteurs chauffants.

3. Procédé selon les revendications 1 et 2, **caractérisé en ce que** les compartiments (1.1, 1.2) pourvus dans les rails de serrage (1) sont configurés sous forme de rainures, d'encoches, d'orifices ou d'ouvertures.

4. Procédé selon les revendications 1 à 3, **caractérisé en ce que** les compartiments (1.1, 1.2) pourvus dans les rails de serrage (1) sont pourvus de contre-dépouilles ou d'étaux de serrage.

5. Procédé selon les revendications 1 à 4, **caractérisé en ce que** les compartiments (1.1, 1.2) pourvus dans les rails de serrage (1) sont agencés plusieurs fois et permettent différentes distances de pose entre les tubes chauffants (2) et les conducteurs chauffants (3).

6. Chauffage en surface qui comprend une combinaison de tubes chauffants (2) à travers lesquels un fluide caloporteur peut s'écouler et de conducteurs chauffants électriques (3), les tubes chauffants (2) conduisant le fluide caloporteur et les conducteurs chauffants électriques (3) étant maintenus par au moins un rail de serrage (1), le rail de serrage (1) fixant les tubes chauffants (2) et les conducteurs chauffants (3) sur la zone de surface destinée au chauffage ou une partie de la zone de surface et le rail de serrage (1) étant pourvu de compartiments (1.1, 1.2) pour les tubes chauffants (2) et pour les conducteurs chauffants électriques (3), **caractérisé en ce que** les tubes chauffants 2 conduisant le fluide caloporteur sont agencés de manière sinueuse sur un rail de serrage (1) positionné de manière centrale ou sont agencés en parallèle et de manière opposée entre deux rails de serrage (1).

7. Chauffage en surface selon la revendication 6, **caractérisé en ce que** les compartiments (1.1, 1.2) pourvus dans les rails de serrage (1) sont attachés à des distances définies les uns des autres et sont configurés sous forme d'ouvertures qui correspondent aux diamètres et/ou aux formes des sections transversales des tubes chauffants (2) et des conducteurs chauffants (3).

8. Chauffage en surface selon l'une quelconque des revendications 6 et 7, **caractérisé en ce que** les compartiments (1.1, 1.2) pourvus dans les rails de serrage (1)sont configurés sous forme de rainures, d'encoches, d'orifices ou d'ouvertures.

9. Chauffage en surface selon l'une quelconque des revendications 6 à 8, **caractérisé en ce que** les compartiments (1.1, 1.2) pourvus dans les rails de serrage (1) comprennent des contre-dépouilles ou des étaux de serrage.

10. Chauffage en surface selon l'une quelconque des revendications 6 à 9, **caractérisé en ce que** les compartiments (1.1, 1.2) pourvus dans les rails de serrage (1) sont agencés plusieurs fois et permettent différentes distances de pose entre les tubes chauffants et les conducteurs chauffants.
